# EUROPEAN PATENT APPLICATION

(11) **EP 1 803 354 A1**
(43) Date of publication of application: **04.07.2007**
(21) Application number: 05425855.3
(22) Date of filing: 30.11.2005
(51) Int. Cl.: A21D 13/00

(54) **Ice-cream cake with granita (pastry product)**

(71) Applicant: Labita, Nicolo', 91011 Alcamo (IT)
(72) Inventor: Pirrone, Illuminato, 91011 Alcamo (IT)

(57) **Abstract**

Lemon ice-cream cake characterized by the presence of a sponge cake, cream, ice cream mousse, granita, scents and anisette,

## Description

The present invention has for object the production of an ice-cream cake, characterized by an upper covering made of a granita layer. Differently from the others existing ice-cream cakes in the market, that have a jelly or fruit jelly upper covering, the product in object introduces as an innovation a granita upper covering. This layer of granita gives to the product a pleasing taste to the palate. The invention is now explaining with reference to the attached pictures, showing an exemplificative shape of execution of the ice-cream cake in object.

The picture 1 is a frontal elevation of the ice-cream cake in its complex, including the decoration too.

In the picture 2 it is indicated the base of the product, that consists in a sponge cake approximately 0,0787 high and is prepared in the following way:

### INGREDIENTS:

A. WHEAT FLOUR
B. STARCH
C. DEXTROSE
D. POWDERED SKIM MILK
E. DEHYDRATED GLUCOSE SYRUP
F. EMULSIFYING AGENT
G. LEAVING AGENTS E450i AND E500ii
H. FLAVOURINGS
I. COLOURINGS E160b-E100
J. FGGS

PROCEDURE: Put these ingredients in the cream whipping machine and whip for 2 minutes to low speed and 8-10 minutes to high speed, afterwards put in the already buttered stamps and cook at a temperature of 200 C° for about 20 minutes. The sponge cake has to be damped by a liquid composed by: water, sugar, anisette.

The picture 3 shows the ice-cream cake. It has a height of 0,9449 in It is prepared in the following way:

### INGREDIENTS:

A. FRESH CREAM FAT 38
B. GLUCOSE SYRUP
C. SUGAR
D. EGG YOLKS
E. DEXTROSE
F. ALCOHOL
G. RISE STARCH
H. STABILIZER E466
I. FLAVOUNNG
J. LACTOSE
K. MILK PROTEINS

PROCEDURE: Put the abovementioned ingredients in the cream whipping machine and whip since you obtain a dense product.

The picture 4 shows the layer of granita, about 0,1969 in. high. It is prepared in the following way:

### INGREDIENTS:

A. WATER (ABOUT 40 C° OF TEMPERATURE)
B. SUGAR
C. ACCORDING TO THE TASTE OF THE GRANITA, YOU CAN USE FOR EXAMPLE THE FOLLOWING PRODUCTS: "LEMON JUICE, ORANGE JUICE, MULBERRY ETC."

PROCEDURE: Put the sugar in the water with the juice of the wished taste and stir until the complete dissolution of the sugar. Now put the compound in the blast chiller to shape the granita. Picture 5 shows the final decoration of the ice-cream cake with sugar Crystals. These sugar crystals are prepared in the following way:

### INGREDIENTS:

A. WATER
B. SUGAR
C. GLUCOSE
D. YELLOW COLORING (E102) DEIONIZED WATER
E. GREEN COLORING (E131) DEIONIZED WATER
F. BLUE COLORING (E133) DEIONIZED WATER
G. RED COLORING (E124) DEIONIZED WATER

PROCEDURE: Stir the water, the sugar and the glucose, when the compound reaches a temperature of about 140C°, add the wished coloring and proceed to cool the compound on silicone sheets.

The particulars of the invention can change, but without exit from the dominion of the patent.

The picture 6 shows the inner part of the product, divided into several layers.

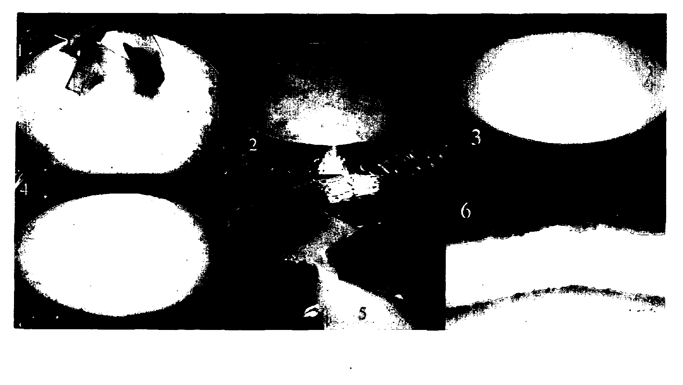

## Claims

1. The product is **characterized by** the coupling of the ice-cream mousse and several tastes of granita. The latter finds position in the upper layer of the finished product.

2. Ice-cream cake referred to the vindication I, **characterized by** one layer of sponge cake (about 0,0787 in ). The sponge cake is damped with anisette. The layer of ice-cream cake is about 0,9449 in high, it is laid on the sponge cake, (the all carried to a temperature of -18°C), and the final granita's layer with the accurate sugar decorations. The final product without decoration has a height of about 1, 18 in.
